# NEUE EUROPÄISCHE PATENTSCHRIFT

(11) **EP 2 445 368 B2**
(45) Veröffentlichungstag und Bekanntmachung des Hinweises auf die Entscheidung über den Einspruch: **23.12.2020**
(45) Hinweis auf die Patenterteilung: 17.01.2018
(21) Anmeldenummer: 10725780.0
(22) Anmeldetag: 23.06.2010
(51) Int. Cl.: A41D 31/02, A43B 7/12, B32B 27/12, B32B 5/26

(54) **SCHUH UND KLEIDUNGSSTÜCK MIT VERBESSERTER ATMUNGSAKTIVITÄT**
SHOE AND ITEM OF CLOTHING WITH IMPROVED RESPIRATION
CHAUSSURE ET HABIT AYANT UNE ACTIVITÉ RESPIRATOIRE AMÉLIORÉE

(30) Priorität: 26.06.2009 EP 09163888
(43) Veröffentlichungstag der Anmeldung: 02.05.2012
(73) Patentinhaber: Sympatex Technologies GmbH, 85774 Unterföhring (DE)
(72) Erfinder: PAVELESCU, Liviu-Mihai, 81925 München (DE); RAITH, Paul Edmund, 85457 Wörth (DE); MOUHASSIN, Mhamed, 80939 München (DE)
(74) Vertreter: Oberlein, Gerriet H. R.
(86) Internationale Anmeldenummer: PCT/EP2010/058867
(87) Internationale Veröffentlichungsnummer: WO 2010/149680

(56) Entgegenhaltungen:
- EP-A1- 1 004 251
- WO-A1-00/22948
- WO-A1-2004/020931
- DE-A1- 3 942 879
- DE-A1- 4 000 156
- DE-A1- 4 419 801
- DE-U1- 29 900 334
- FR-A- 2 905 053
- US-A1- 2008 096 454

## Beschreibung

Die vorliegende Erfindung betrifft einen Schuh mit verbesserter Atmungsaktivität.

Atmungsaktive Schuhe und Kleidungsstücke sind bekannt. So beschreibt EP 0 857 433 B1 einen Schuh mit einer Außenschicht und innerhalb dieser Außenschicht verlaufenden Ventilationsschicht, welche zumindest auf der dem Innenraum des Schuhs zugekehrten Seite ein textiles Flächengebilde aufweist, welches über Abstandshalter auf Abstand von der Außenschicht gehalten wird. DE 44 19 801 A1 beschreibt ein Bekleidungsstück und ein Schuhwerk jeweils mit einer Außenschicht und mit einem Verbundwerkstoff. Aus US 2008/096454 A1 ist auch ein laminiertes Kleidungsstück bekannt. Der Verbundwerkstoff enthält eine wasserdichte, wasserdampfdurchlässige Funktionsschicht, wobei auf einer Seite der Funktionsschicht eine luftdurchlässige Wirkwarenschicht angeordnet ist. Die Außenschicht kann mindestens ein Vertreter der eine Lederschicht, Textilschicht, textilartige Schicht und Gewebe umfassenden Gruppe sein. Möglich sind für die Außenschicht als Obermaterial Segeltuchstoffe, Chintz, Everglaze, Frottierware, Samt, Manchester, Cord, Velveton, Norzon, Ledertuch, Ledersamt, Duventine, gestrickte oder gewirkte Gewebe, Satin, Fell, Fellimintation, Rauh-, Glatt-, Lackleder oder geschliffenes, geprägtes, geschrumpftes oder gekrispeltes Leder. Die Außenschicht ist auf dem Verbundwerkstoff lediglich angeordnet, wobei die Außenschicht auf der der Wirkwarenschicht gegenüberliegenden Seite der Funktionsschicht oder auf der der Funktionsschicht gegenüberliegenden Seite der Wirkwarenschicht angeordnet sein kann.

Jedoch besteht bei den Trägern von atmungsaktiven Schuhen und Kleidungsstücken ein Bedürfnis nach einer noch besseren Atmungsaktivität, insbesondere bei sehr starkem Schwitzen. Daher stellt sich die vorliegende Erfindung die Aufgabe, die Atmungsaktivität von atmungsaktiven Schuhen und Kleidungsstücken weiter zu verbessern.

Diese Aufgabe wird gelöst durch den Gegenstand von Anspruch 1. Vorzugsweise besteht der Schaft des erfindungsgemäßen Schuhs zu mindestens 50 %, noch bevorzugter zu mindestens 65 % und ganz besonders bevorzugt zu mindestens 80 % aus dem Composite (I).

Im Composite (I) des erfindungsgemäßen Schuhs ist die als Außenschicht dienende Ventilationsschicht A) mit der wasserdichten, wasserdampfdurchlässigen Membran B) dadurch laminiert, dass die Ventilationsschicht A) mit der Membran B) punkt- oder netzförmig laminiert ist, wozu ein Klebstoff oder eine Flammkaschierung Anwendung findet.

Ferner ist im Composite (I) des erfindungsgemäßen Schuhs die wasserdichte, wasserdampfdurchlässige Membran B) mit der Wirkware C) dadurch laminiert, dass die Membran B) mit der Wirkware C) punkt- oder netzförmig mit einem Klebstoff laminiert ist.

Bei der Herstellung des Composits (I) kann in der zuvor beschriebenen Weise zuerst die Ventilationsschicht A) mit der Membran B) laminiert werden, worauf das entstandene A)-B) - Laminat in der vorstehend beschriebenen Weise mit der Wirkware C) zu einem A)-B)-C) - Composite (I) verbunden wird.

Vorzugsweise wird jedoch bei der Herstellung des Composits (I) in der zuvor beschriebenen Weise zuerst die Membran B) mit der Wirkware C) laminiert, worauf das entstandene B)-C - Laminat in der vorstehend beschriebenen Weise mit der Ventilationsschicht A) zu einem A)-B)-C) - Composite (I) verbunden wird.

Überraschenderweise zeigt der erfindungsgemäße Schuh eine im Vergleich zu den aus EP 0 857 433 B1 und DE 44 19 801 A1 bekannten Schuhen verbesserte Atmungsaktivität. Die verbesserte Atmungsaktivität äußert sich nicht nur durch einen sehr schnellen Abtransport von auf der Hautoberfläche gebildetem Schweiß durch die Wirkware C) und - als Wasserdampf - durch die Membran B), sondern auch dadurch, dass der an der Grenzfläche zwischen der Membran B) und der Ventilationsschicht A) angelangte Wasserdampf praktisch ungehindert und somit sehr schnell von der Membran B) durch die als Außenschicht dienende Ventilationsschicht A) abdampft. Somit erlaubt der erfindungsgemäße Schuh gerade bei starker Schweißbildung einen sehr effizienten Abtransport von Schweißwasser aus dem Schuhinneren nach außen, wofür die Laminierung der Ventilationsschicht A) mit der Membran B) mitverantwortlich ist. Ein Vergleichscomposite, der sich von dem im erfindungsgemäßen Schuh eingesetzten Composite (I) nur dadurch unterscheidet, dass die Ventilationsschicht A) nicht mit der Membran B) laminiert ist, sondern lediglich auf der Membran B) aufliegt, zeigt einen langsameren Abtransport von Schweißwasser aus dem Schuhinneren als der im erfindungsgemäßen Schuh eingesetzte Composite (I).

Dieser Effekt wird durch jede Vorwärtsbewegung des Fußes verstärkt, weil die mit der Membran B) laminierte Ventilationsschicht A) bei jeder Vorwärtsbewegung des Fußes für eine Luftzirkulation sorgt, welche die Verdampfung der Feuchtigkeit aus dem Schuh heraus verstärkt, wodurch sich beim Träger des Schuhs auch noch ein als sehr angenehm empfundener Kühlungseffekt einstellt. Auch für diesen weiteren vorteilhaften Effekt ist die Laminierung der Ventilationsschicht A) mit der Membran B) mitverantwortlich. Ein Vergleichscomposite, der sich von dem im erfindungsgemäßen Schuh eingesetzten Composite (I) nur dadurch unterscheidet, dass die Ventilationsschicht A) nicht mit der Membran B) laminiert ist, sondern lediglich auf der Membran B) aufliegt, zeigt eine geringere Verstärkung der Luftzirkulation bei der Vorwärtsbewegung des Fußes als der im erfindungsgemäßen Schuh eingesetzte Composite (I).

Ferner dringt Wasser, das von außen auf den Schuh gelangt, z.B. durch Regen oder durch Hineintreten in Pfützen, zwar sehr schnell durch die Ventilationsschicht A) bis auf die der Ventilationsschicht A) zugewandte Oberfläche der Membran B) ein. Jedoch lässt die Ventilationsschicht A) die durch das eingedrungene Wasser entstandene Feuchtigkeit praktisch ungehindert von der Oberfläche der Membran B) verdampfen, sodass die Feuchtigkeit sehr schnell vom erfindungsgemäßen Schuh entfernt wird, wobei die körpereigene Temperaturregelung zusätzlich unterstützt wird. Und auch für diesen weiteren überraschenden Effekt ist die Laminierung der Ventilationsschicht A) mit der Membran B) mitverantwortlich. Ein Vergleichscomposite, der sich von dem im erfindungsgemäßen Schuh eingesetzten Composite (I) nur dadurch unterscheidet, dass die Ventilationsschicht A) nicht mit der Membran B) laminiert ist, sondern lediglich auf der Membran B) aufliegt, zeigt eine langsamere Verdampfung von Wasser, das von außen durch die Ventilationsschicht A) auf die Membran B) gelangt ist, als der im erfindungsgemäßen Schuh eingesetzte Composite (I).

In einer Ausführungsform des beschriebenen Schuhs umfasst der Composite (I) zusätzlich einen Futterstoff D), wobei D) auf der von der Membran B) abgewandten Seite der Wirkware C) laminiert ist oder lediglich auf der von der Membran B) abgewandten Seite der Wirkware C) aufliegt.

Die im Composite (I) des beschriebenen Schuhs eingesetzte als Außenschicht dienende Ventilationsschicht A) kann grundsätzlich aus jedem textilen Flächengebilde, also z.B. aus einem Gewebe, Gewirk, Gestrick oder Vlies bestehen, dessen Konstruktion in Gestalt ausreichend beabstandeter Fasern einen praktisch ungehinderten Eintritt von Luft und Wasser in die Ventilationsschicht A) erlaubt und zulässt, dass Luft und Wasser die Ventilationsschicht A) praktisch ungehindert wieder verlassen. Dabei können die Fasern, aus denen die Ventilationsschicht A) besteht, derart weit beabstandet sein, dass die mit der Ventilationsschicht A) laminierte Membran B) mit bloßem Auge durch die Öffnungen hindurch sichtbar ist, welche die beabstandeten Fasern in der Ventilationsschicht A) bilden. Zudem ist die Ventilationsschicht A) als Folge ihres Aufbaus aus ausreichend beabstandeten Fasern sehr leicht, wodurch auch der Schuh entsprechend leicht wird. Daher weist der im Schuh eingesetzte Composite (I) in einer bevorzugten Ausführungsform ein Flächengewicht von 200 g/m² bis 600 g/m², besonders bevorzugt von 300 g/m² bis 550 g/m² und ganz besonders bevorzugt von 350 g/m² bis 500 g/m² auf.

In einer bevorzugten Ausführungsform des erfindungsgemäßen Schuhs besteht das textile Flächengebilde der als Außenschicht dienenden Ventilationsschicht A) aus Mono- oder Multifilamenten aus z.B. Polyester oder Polyamid und/oder deren Mischungen.

In einer weiteren bevorzugten Ausführungsform des erfindungsgemäßen Schuhs ist die Ventilationsschicht A) ein Abstandsgewirke, das vorzugsweise ein Flächengewicht von 170 g/m² bis 570 g/m², besonders bevorzugt von 270 g/m² bis 520 g/m² und ganz besonders bevorzugt von 320 g/m² bis 470 g/m² aufweist.

In einer besonders bevorzugten Ausführungsform des erfindungsgemäßen Schuhs ist das Abstandsgewirke der Ventilationsschicht A) eine doppelflächige Kettenwirkware, die in der Regel auf einer Kettenwirkmaschine mittels beispielweise 5-7 Legeschienen hergestellt wird, wobei mindestens jeweils 2 Legeschienen gleiche Garne dem Wirkvorgang zuführen. Ferner sind als Ventilationsschicht A) auch Abstandsgewirke geeignet, die unter der Bezeichnung Doppelraschelplüsch bekannt sind. Die doppelflächige Kettenwirkware und der Doppelraschelplüsch weisen jeweils vorzugsweise ein Flächengewicht von 180 g/m² bis 580 g/m², besonders bevorzugt von 280 g/m² bis 530 g/m² und ganz besonders bevorzugt von 330 g/m² bis 480 g/m² auf.

Als Membran B) im Composite (I) des beschriebenen Schuhs ist grundsätzlich jede wasserdichte und wasserdampfdurchlässige Membran geeignet, wie z. B. eine poröse und aus einem hydrophoben und beispielsweise polymeren Material, z.B. aus Teflon, bestehende Membran. Vorzugsweise ist jedoch die Membran B) im Composite (I) des erfindungsgemäßen Schuhs porenfrei und besteht vorzugsweise aus mindestens einem hydrophilen Polymeren, das besonders bevorzugt ein Polyetherester, ein Polyetheramid, ein Polyetherurethan, ein Copolyetheresteramind, ein Copolyetheresterurethan oder ein Gemisch aus zwei oder mehreren der genannten Verbindungen ist. Solche Membranen sind unter der Bezeichnung "Sympatex" bekannt und können als Einschichtmembran die Komponente B) des Composites (I) bilden. Jedoch ist es auch möglich, dass die Membran B) aus einem Sandwich aus einer ersten und einer zweiten Komponente besteht, wobei die erste Komponente eine Membran B1) ist, die aus einem der vorstehend genannten hydrophilen Polymeren besteht, und die zweite Komponente eine Membran B2) ist, die aus einem anderen der vorstehend genannten hydrophilen Polymeren besteht. In einem derartigen Sandwich kann beispielsweise B1) eine Membran aus einem Polyetherester und B2) einen Membran aus einem Polyetherurethan sein.

In der Ausführungsform des erfindungsgemäßen Schuhs mit hydrophiler wasserdichter und wasserdampfdurchlässiger Membran B) wurde überraschenderweise gefunden, dass die Wasserdampfdurchlässigkeit der Membran B) sogar noch steigt, wenn in die Ventilationsschicht A) des erfindungsgemäßen Schuhs Wasser eingedrungen ist, das auf der der Ventilationsschicht zugewandten Seite der Membran B) aufliegt. Dadurch verbessert sich die Atmungsaktivität des erfindungsgemäßen Schuhs gerade in solchen Tragesituationen, in denen als Folge hoher Schweißabsonderung und als Folge von von außen einwirkendem Wasser eine hohe Atmungsaktivität des Schuhs besonders erwünscht ist. Und auch für diesen weiteren überraschenden Effekt ist die Laminierung der Ventilationsschicht A) mit der Membran B) mitverantwortlich. Ein Vergleichscomposite, der sich von dem im erfindungsgemäßen Schuh eingesetzten Composite (I) nur dadurch unterscheidet, dass die Ventilationsschicht A) mit der Membran B) nicht laminiert ist, sondern lediglich auf der Membran B) aufliegt, zeigt in den o.g. Tragesituationen eine kleinere Wasserdampfdurchlässigkeit als der im erfindungsgemäßen Schuh eingesetzte Composite (I).

Die Wirkware C) des erfindungsgemäßen Schuhs kann aus einem Multifilamentgarn bestehen. In einer bevorzugten Ausführungsform des erfindungsgemäßen Schuhs besteht die Wirkware C) aus Monofilamenten und hat vorzugsweise ein Flächengewicht im Bereich von 10 bis 50 g/m², noch bevorzugter im Bereich von 10 bis 40 g/m² und ganz besonders bevorzugt im Bereich von 15 bis 35 g/m².

Der Futterstoff D) im Composite (I) des beschriebenen Schuhs kann aus einem hydrophoben Material bestehen. In einer bevorzugten Ausführungsform des beschriebenen Schuhs ist der Futterstoff D) hydrophil und besteht z.B. aus einem textilen Flächengebilde, also aus einem Gewebe, Gewirk, Gestrick oder Vlies aus z.B. Polyester, Polyamid, Polyacrylnitril und/oder deren Mischungen.

Beschrieben ist ferner ein Kleidungsstück zu mindestens 30 % bestehend aus einem Composite (II), wobei der Composite (II) zumindest
1. A) eine als Außenschicht dienende Ventilationsschicht umfasst, die laminiert ist mit
2. B) einer wasserdichten, wasserdampfdurchlässigen Membran.

Im Composite (II) des Kleidungsstücks ist die als Außenschicht dienende Ventilationsschicht A) mit der wasserdichten, wasserdampfdurchlässigen Membran B) dadurch laminiert, dass die Ventilationsschicht A) mit der Membran B) punkt- oder netzförmig laminiert ist, wozu ein Klebstoff oder eine Flammkaschierung Anwendung findet.

Vorzugweise besteht das Kleidungsstück zu mindestens 70 % und ganz besonders bevorzugt zu mindestens 90 % aus dem Composite (II).

Überraschenderweise zeigt das Kleidungsstück eine verbesserte Atmungsaktivität. Die verbesserte Atmungsaktivität äußert sich nicht nur durch einen sehr schnellen Abtransport von auf der Hautoberfläche gebildetem Schweiß - als Wasserdampf - durch die Membran B), sondern auch dadurch, dass der auf der Ventilationsschicht A) angelangte Wasserdampf praktisch ungehindert und somit sehr schnell durch die als Außenschicht dienende Ventilationsschicht A) abdampft. Somit erlaubt das Kleidungsstück gerade bei starker Schweißbildung einen sehr effizienten Abtransport von Schweißwasser von der Hautoberfläche des Trägers nach außen, wofür die Laminierung der Ventilationsschicht A) mit der Membran B) mitverantwortlich ist. Ein Vergleichscomposite, der sich von dem im Kleidungsstück eingesetzten Composite (II) nur dadurch unterscheidet, dass die Ventilationsschicht A) nicht mit der Membran B) laminiert ist, sondern lediglich auf der Membran B) aufliegt, zeigt einen langsameren Abtransport von Schweißwasser von der Hautoberfläche des Trägers durch den Vergleichscomposite hindurch als der im Kleidungsstück eingesetzte Composite (II).

Dieser Effekt wird durch jede Luftzirkulation in der mit der Membran B) laminierten Ventilationsschicht A), die bei körperlicher Bewegung unvermeidlich auftritt, noch verstärkt, weil die Verdampfung der Feuchtigkeit von der Hautoberfläche aus dem Kleidungsstück heraus verstärkt wird, wodurch sich beim Träger des Kleidungsstücks auch noch ein als sehr angenehm empfundener Kühlungseffekt einstellt. Ferner dringt Wasser, das von außen auf das Kleidungsstück gelangt, z.B. durch Regen, zwar sehr schnell durch die Ventilationsschicht A) bis auf die der Ventilationsschicht A) zugewandte Oberfläche der Membran B) ein. Jedoch lässt die Ventilationsschicht A) die durch das eingedrungene Wasser entstandene Feuchtigkeit praktisch ungehindert verdampfen, sodass die Feuchtigkeit sehr schnell vom Kleidungsstück entfernt wird, wobei die körpereigene Temperaturregelung zusätzlich unterstützt wird. Und auch für diesen weiteren überraschenden Effekt ist die Laminierung der Ventilationsschicht A) mit der Membran B) mitverantwortlich. Ein Vergleichscomposite, der sich von dem im Kleidungsstück eingesetzten Composite (II) nur dadurch unterscheidet, dass die Ventilationsschicht A) nicht mit der Membran B) laminiert ist, sondern lediglich auf der Membran B) aufliegt, zeigt eine langsamere Verdampfung von Wasser, das von außen durch die Ventilationsschicht A) auf die Membran B) gelangt ist, als der im Kleidungsstück eingesetzte Composite (II).

In einer bevorzugten Ausführungsform des Kleidungsstücks umfasst der Composite (II) zusätzlich eine Wirkware C), wobei C) auf der von der Ventilationsschicht A) abgewandten Seite der Membran B) laminiert ist.

In einer weiteren bevorzugten Ausführungsform des Kleidungsstücks umfasst der Composite (II) zusätzlich einen Futterstoff D), wobei der Futterstoff D) entweder
1. i) auf der von der Ventilationsschicht A) abgewandten Seite der Membran B) laminiert ist oder lediglich auf der von der Ventilationsschicht A) abgewandten Seite der Membran B) aufliegt oder
2. ii) auf der von der Membran B) abgewandten Seite der Wirkware C) laminiert ist oder lediglich auf der von der Membran B) abgewandten Seite der Wirkware C) aufliegt.

Die im Composite (II) des Kleidungsstücks als Außenschicht dienende Ventilationsschicht A) kann grundsätzlich aus jedem textilen Flächengebilde, also z.B. aus einem Gewebe, Gewirke, Gestrick oder Vlies bestehen, dessen Konstruktion in Gestalt ausreichend beabstandeter Fasern einen praktisch ungehinderten Eintritt von Wasser in die Ventilationsschicht A) erlaubt und zulässt, dass Luft und Wasser die Ventilationsschicht A) praktisch ungehindert wieder verlassen. Zudem ist die Ventilationsschicht A) als Folge ihres Aufbaus aus ausreichend beabstandeten Fasern sehr leicht. Daher weist der Composite (II) im Kleidungsstück in einer bevorzugten Ausführungsform ein Flächengewicht von 120 g/² bis 700 g/², besonders bevorzugt von 220 g/m² bis 650 g/m² und ganz besonders bevorzugt von 270 g/m² bis 600 g/m² auf.

Im übrigen gilt im Kleidungsstück für die Ventilationsschicht A), die Membran B), die Wirkware C) und den Futterstoff D) sinngemäß das Gleiche wie bereits bei der Beschreibung des Schuhs ausgeführt wurde.

In bevorzugten Ausführungsformen ist das Kleidungsstück eine Jacke, eine Hose, eine Mütze oder ein Handschuh.

## Patentansprüche

1. Schuh umfassend einen Schaft, wobei der Schaft zu mindestens 30 % aus einem Composite (I) besteht, wobei der Composite (I) besteht aus:
A) einer als Außenschicht dienende Ventilationsschicht, wobei die Ventilationsschicht A) ein Abstandsgewirke ist, das laminiert ist mit
B) einer wasserdichten, wasserdampfdurchlässigen Membran, die wiederum auf ihrer von der Ventilationsschicht A) abgewandten Seite laminiert ist mit
C) einer Wirkware, wobei die Membran aus polymerem Material besteht.

2. Schuh nach Anspruch 1, **dadurch gekennzeichnet, dass** das Abstandsgewirke eine doppelflächige Kettenwirkware ist.

3. Schuh nach einem oder mehreren der Ansprüche 1 bis 2, **dadurch gekennzeichnet, dass** die Membran B) aus mindestens einem hydrophilen Polymeren besteht.

4. Schuh nach Anspruch 3, **dadurch gekennzeichnet, dass** das hydrophile Polymer ein Polyetherester, ein Polyetheramid, ein Polyetherurethan, ein Copolyetheresteramind, ein Copolyetheresterurethan oder ein Gemisch aus zwei oder mehreren der genannten Verbindungen ist.

5. Schuh nach einem oder mehreren der Ansprüche 1 bis 4, **dadurch gekennzeichnet, dass** die Wirkware C) aus Monofilamenten besteht und ein Flächengewicht im Bereich von 10 bis 50 g/m² hat.

## Claims

1. Shoe comprising a shaft, wherein at least 30% of the shaft is made of a composite (I), wherein the composite (I) consists of:
A) a ventilation layer, which serves as an outer layer, wherein the ventilation layer A) is a knitted spacer fabric and is laminated to
B) a water-proof, water vapor-permeable membrane, which in turn is laminated on the side facing away from the ventilation layer A) to
C) a knitted fabric,
wherein the membrane consists of a polymeric material.

2. Shoe according to Claim 1, **characterized in that** the knitted spacer fabric is a simplex fabric.

3. Shoe according to one or more of Claims 1 to 2, **characterized in that** the membrane B) consists of at least one hydrophilic polymer.

4. Shoe according to Claim 3, **characterized in that** the hydrophilic polymer is a polyether ester, a polyether amide, a polyether urethane, a copolyetheresteramide, a copolyetheresterurethane, or a mixture of two or more of the listed compounds.

5. Shoe according to one or more of Claims 1 to 4, **characterized in that** the knitted fabric C) consists of monofilaments and has a mass per unit area in the range from 10 to 50 g/m².

## Revendications

1. Chaussure comprenant une tige, la tige se composant pour au moins 30% d'un composite (I), le composite (I) se compose de:
A) une couche de ventilation servant de couche extérieure, la couche de ventilation A) étant une structure d' espacement à mailles qui est laminée avec
B) une membrane étanche à l'eau, laissaut passer la vapeur d'eau, qui est à son tour laminée, sur sa face éloignée de la couche de ventilation A), avec
C) une structure tricotée,
que la membrane se compose d'un matériel polymérique.

2. Chaussure selon la revendication 1, **caracterisée en ce que** la structure d' espacement à mailles est un produit à mailles jetées double face.

3. Chaussure selon une ou plusieurs des revendications 1 à 2, **caractérisée en ce que** la membrane B) se compose d'au moins un polymère hydrophile.

4. Chaussure selon la revendication 3, **caracterisée en ce que** le polymère hydrophile est un polyéther-ester, un polyéther-amide, un polyétheruréthane, un copolyéther-ester-amide, un copolyéther-ester- uréthane ou un mélange de deux ou plusieurs des composés cités.

5. Chaussure selon une ou plusieurs des revendications 1 à 4, **caracterisée en ce que** la structure tricotée C) se compose de monofilaments et présente une masse surfacique comprise dans la plage allant de 10 a 50 g/m².
